# EUROPÄISCHE PATENTANMELDUNG

(11) **EP 0 934 852 A1**
(43) Veröffentlichungstag der Anmeldung: **11.08.1999**
(21) Anmeldenummer: 99101078.6
(22) Anmeldetag: 25.01.1999
(51) Int. Cl.: B60R 21/13

(54) **Überrollschutz für ein offenes Kraftfahrzeug, insbesondere für ein Cabriolet**

(30) Priorität: 07.02.1998 DE 19804946
(71) Anmelder: Volkswagen Aktiengesellschaft, 38436 Wolfsburg (DE)
(72) Erfinder: Schwant, Wilfried, Dipl.-Ing., 38536 Meinersen (DE)

(57) **Zusammenfassung**

Die vorliegende Erfindung betrifft einen Überrollschutz (10) für ein offenes Kraftfahrzeug, insbesondere für ein Cabriolet, mit mindestens einem Überrollschutzelement (12), das bei einer Aktivierung des Überrollschutzes (10) von einem unter Druck stehenden inkompressiblen Fluid aus einer Ausgangsstellung nach oben in eine Überrollstellung getrieben wird.

Um auch bei einem Ausfall der Energieversorgung des Kraftfahrzeugs vor oder während des Überschlagens ein vollständiges Ausfahren des Überrollschutzelements (12) in die Überrollstellung sicherzustellen und/oder bei einer Fluidleckage die Blockierung des Überrollschutzelements in der erreichten Stellung ohne eine zusätzliche mechanische Sperre zu ermöglichen, wird gemäß einer ersten erfindungsgemäßen Alternative vorgeschlagen, daß das inkompressible Fluid bei der Aktivierung des Überrollschutzes (10) mit einem Druckgas beaufschlagbar ist, so daß es in mindestens einen Zylinder (26, 26') einer auf das Überrollschutzelement (12) einwirkenden Zylinder/Kolbenanordnung (30) strömt, während es gemäß einer zweiten Alternative oder bevorzugten Ausgestaltung der Erfindung vor dem Eintritt in den Zylinder (26) ein selbsttätig schließendes Rückschlagventil (56) durchströmt.

## Beschreibung

Die vorliegende Erfindung betrifft einen Überrollschutz für ein offenes Kraftfahrzeug, insbesondere für ein Cabriolet, mit mindestens einem Überrollschutzelement, das bei einer Aktivierung des Überrollschutzes von einem unter Druck stehenden inkompressiblen Fluid aus einer Ausgangsstellung nach oben in eine Überrollstellung getrieben wird.

Aus der DE 40 10 996 A1 ist bereits ein Überrollschutz für Kraftfahrzeuge bekannt, bei dem zwei getrennte, als Überrollbügel ausgebildete Überrollschutzelemente hydraulisch ausgefahren werden. Die beiden Überrollbügel sind dort starr mit den Kolbenstangen zweier getrennter Hydraulikzylinder verbunden, die durch Betätigung elektromagnetischer Wegeventile abwechselnd von einer Hydropumpe mit einem inkompressiblen Fluid beaufschlagt werden, um einen Gleichlauf der beiden Kolbenstangen und damit ein synchrones Ausfahren der beiden Überrollbügel zu gewährleisten. Jedoch gibt es Unfallsituationen, bei denen sich das Kraftfahrzeug erst im Anschluß an einen Aufprall auf ein Hindernis oder einen Frontalzusammenstoß überschlägt, so daß es zum Beispiel durch Beschädigung der Fahrzeugbatterie, Stillstand des Motors und/oder Zerstörungen in der Bordelektrik bereits vor oder während des Überschlagens zu einem Ausfall der Energieversorgung der Hydropumpe und/oder der Wegeventile kommen kann. Dies hat zur Folge, daß der Überrollschutz nicht oder nur unvollständig ausgefahren wird. Wenn das Cabriolet nach dem Überschlagen kopfüber liegen bleibt, ist es außerdem je nach Art der verwendeten Hydropumpe möglich, daß das inkompressible Fluid von der auf die Überrollbügel einwirkenden Gewichtskraft eines Teils des Cabriolets durch die Pumpe hindurch in den Speicher zurückgedrückt wird, so daß sich die Überrollbügel in die Ausgangsstellung zurückbewegen und der Überlebensraum für die Insassen nach und nach kleiner wird. Entsprechendes gilt auch bei einem Bruch der Fluidleitungen und einer daraus resultierenden Fluidleckage. Darüberhinaus muß die Hydropumpe bei dem bekannten Überrollschutz ein großes Pumpvolumen aufweisen und/oder mit hoher Drehzahl von einem sehr schnell ansprechenden Pumpenmotor angetrieben werden, um ein schnelles Ausfahren der Überrollbügel beim Überschlagen des Kraftfahrzeugs sicherzustellen, so daß schwere und teuere Komponenten erforderlich sind.

Weitere hydraulisch ausfahrbare Überrollschutzelemente sind aus der DE 42 41 054 C1 sowie aus der DE 37 32 562 C1 bekannt. Während in der zuerst genannten Druckschrift vorgeschlagen wird, die Mittelsäule eines Personenkraftwagens in Höhenrichtung zu teilen und den oberen Teil in den unteren Teil zu versenken, um ihn im Crashfall hydraulisch oder pneumatisch auszufahren, ist in der zuletzt genannten Druckschrift ein Überrollschutz für einen Kraftwagen beschrieben, dessen Überrollbügel bei einem Überschlagen des Kraftwagens durch eine Ausstoßfeder einer ersten Zylinder/Kolbeneinheit in die Überrollstellung bewegt wird und zusätzlich auf Wunsch gesteuert in die Überrollstellung und zurück in die Ausgangsstellung verfahren werden kann, beispielsweise hydraulisch mit Hilfe eines doppelt wirkenden Hydraulikzylinders einer zweiten Zylinder/Kolbeneinheit, der von einem Hydraulikaggregat mit einem inkompressiblen Fluid beaufschlagt wird. Auch hier wird die Anfälligkeit des Überrollschutzes gegen einen Ausfall der Energieversorgung des Hydraulikaggregats sowie das hohe Gewicht dieser Komponente und ihres Antriebs als nachteilig angesehen.

Aus der DE 43 42 401 A1 ist es weiter bereits an sich bekannt, zur Auslösung eines Überrollbügels im Crashfall einen pyrotechnischen Zündsatz zu verwenden, der zugleich auch als Antrieb für den Überrollbügel dienen kann. Ein Nachteil pyrotechnischer Zündsätze zum Ausfahren eines Überrollbügels mit zwei parallelen Zylinder/Kolbeneinheiten besteht darin, daß ein weiterer durch den Gasdruck mit Kraft beaufschlagter Antriebszylinder erforderlich ist, um ein ungleichmäßiges Ausfahren der beiden Zylinder/Kolbeneinheiten zu verhindern. Außerdem kühlen sich die heißen Verbrennungsgase eines pyrotechnischen Zündsatzes verhältnismäßig schnell ab, so daß die Überrollbügel in der Überrollstellung mechanisch blockiert werden müssen, um bei einem nach dem Überschlagen kopfüber liegenbleibenden Fahrzeug zu verhindern, daß sich die Überrollbügel beim Abkühlen der Verbrennungsgase wieder in die Ausgangsstellung zurückbewegen.

Ein weiterer Überrollschutz mit pyrotechnisch ausfahrbarem Überrollschutzelement ist aus der DE 195 01 522 A1 bekannt, wo die mechanische Sperre zum Blockieren des Überrollschutzelements von einem Tellerfederpaket gebildet wird. Jedoch vergrößert das Tellerfederpaket ebenfalls das Gewicht des Überrollschutzes und macht nach einer Aktivierung in der Regel einen Austausch des gesamten Überrollschutzes erforderlich.

Ausgehend hiervon liegt der Erfindung die Aufgabe zugrunde, einen Überrollschutz der eingangs genannten Art dahingehend zu verbessern, daß auch bei einem Ausfall der Energieversorgung des Kraftfahrzeugs vor oder während des Überschlagens ein vollständiges Ausfahren des Überrollschutzelements in die Überrollstellung sichergestellt und/oder die Blockierung des Überrollschutzelements in der erreichten Stellung ohne eine zusätzliche mechanische Sperre ermöglicht wird.

Diese Aufgabe wird gemäß einer ersten erfindungsgemäßen Alternative dadurch gelöst, daß das inkompressible Fluid bei der Aktivierung des Überrollschutzes mit einem aus einem Druckbehälter stammenden oder vorzugsweise von den heißen Verbrennungsgasen eines Gasgenerators gebildeten Druckgas beaufschlagbar ist, so daß es in mindestens einen Zylinder einer auf das Überrollschutzelement einwirkenden Zylinder/Kolbenanordnung strömt, damit auch bei einem Ausfall der Energieversorgung des Kraftfahrzeugs und/oder der Bordelektrik ein Ausfahren des Überrollschutzes in die Überrollstellung gewährleistet ist.

Eine weitere erfindungsgemäße Lösung oder bevorzugte Ausgestaltung der Erfindung sieht vor, daß das inkompressible Fluid vor dem Eintritt in mindestens einen Zylinder einer auf das Überrollschutzelement einwirkenden ersten Zylinder/Kolbenanordnung ein Rückschlagventil durchströmt, das sich bei einem Druckausgleich in Strömungsrichtung vor und hinter dem Rückschlagventil sowie bei einem Druckabfall vor dem Rückschlagventil selbstätig schließt und ein Zurückströmen des Fluids aus der ersten Zylinder/Kolbenanordnung verhindert. Durch diese Maßnahme läßt sich das Überrollschutzelement ohne eine mechanische Sperre nicht nur bei bei ordnungsgemäßer Funktion in der Überrollstellung blockieren, sondern auch bei Auftreten einer Fluidleckage vor dem Ventil in der in diesem Augenblick erreichten Stellung.

Eine bevorzugte Ausgestaltung der Erfindung sieht vor, daß
das Rückschlagventil ein federbelastetes Rückschlagventil und vorzugsweise ein federbelastetes Kugel- oder Teller-Rückschlagventil ist, so daß es sich selbsttätig öffnet, wenn der Druck des Fluids einen vorgegebenen Wert übersteigt, d.h. nach der Zündung des Gasgenerators bzw. nach dem Öffnen des Druckgasbehälters. Vorzugsweise ist eine das Rückschlagventil umgehende Bypassleitung mit einem Absperrhahn vorgesehen, der normalerweise geschlossen ist und zweckmäßig von Hand geöffnet werden kann, um das Fluid aus dem Zylinder der ersten Zylinder/Kolbenanordnung abzulassen, so daß sich das Überrollschutzelement in die Ausgangsstellung zurückbewegen läßt. An Stelle des Absperrhahns kann eine kleine elektrische Rotationspumpe mit umkehrbarer Drehrichtung oder eine andere Pumpe mit umkehrbarer Förderrichtung vorgesehen sein, die jeweils vor und nach jeder Fahrt eingeschaltet werden kann, um das Fluid in den Zylinder der ersten Zylinder/Kolbenanordnung bzw. wieder aus diesem heraus zu pumpen, wenn von Seiten eines Käufers oder Benutzers der Wunsch geäußert wird, das Fahrzeug nur mit ausgefahrenem Überrollschutzelement zu fahren, wie in der DE 40 10 996 A1 ausführlicher ausgeführt. Um bei ausgeschalteter Pumpe ein Zurückströmen des Fluids durch die Bypassleitung zu verhindern, kann entweder eine in stromlosem Zustand sperrend wirkende Pumpe oder ein zusätzliches, normalerweise geschlossenes Sperrventil vorgesehen sein, das beim Einschalten der Pumpe geöffnet wird.

Gemäß einer weiteren bevorzugten Ausgestaltung der Erfindung ist das Überrollschutzelement starr mit mindestens einem Kolben der ersten Zylinder/Kolbenanordnung verbunden, der im Zylinder dieser Zylinder/Kolbenanordnung verschiebbar ist und teleskopierbar sein kann, um den Bewegungsweg beim Ausfahren ohne eine Vergrößerung der Bauhöhe des Überrollschutzes zu verlängern. Bei einem bevorzugten Überrollschutzelement in Form eines Übetrollbügels mit einem horizontalen Joch und zwei vertikalen Schenkeln weist die erste Zylinder/Kolbenanordnung vorzugsweise zwei parallele Zylinder/Kolbeneinheiten auf, deren Kolben in Verlängerung der beiden Schenkel des Überrollbügels angeordnet sind und zweckmäßig starr mit diesen verbunden sind oder von den zylindrischen unteren Enden der Schenkel gebildet werden, und deren Zylinder vorzugsweise am unteren Ende miteinander kommunizieren, um eine gleichmäßige Zufuhr des Fluids in beide Zylinder zu gewährleisten.

Um ein Vermischen des Druckgases mit dem inkompressiblen Fluid zu verhindern, weist der Überrollschutz gemäß einer weiteren vorteilhaften Ausgestaltung der Erfindung eine zweite Zylinder/Kolbenanordnung mit mindestens einem Schwimmkolben auf, der das Druckgas und das Fluid voneinander trennt und bei Beaufschlagung mit dem Druckgas verschoben wird, wobei er das Fluid in den Zylinder der ersten Zylinder/Kolbenanordnung drückt. Bei einer bevorzugten Verwendung eines Gasgenerators zur Erzeugung des Druckgases weist der Zylinder der zweiten Zylinder/Kolbenanordnung zweckmäßig eine Gasablaßöffnung mit kleinern Öffnungsquerschnitt auf, so daß das Druckgas nach dem Ausfahren des Überrollschutzelements zur Druckentlastung nach und nach aus dem Zylinder austreten kann.

Um die Bauhöhe der beiden Zylinder/Kolbenanordnungen klein zu halten, sieht eine weitere vorteilhaften Ausgestaltung der Erfindung vor, daß der Schwimmkolben der zweiten Zylinder/Kolbenanordnung eine wesentlich größere Querschnittsfläche aufweist als der zweckmäßig mit dem Überrollschutzelement zusammenwirkende Kolben der ersten Zylinder/Kolbenanordnung. Alternativ dazu kann die zweite Zylinder/Kolbenanordnung aus demselben Grund zwei horizontale Zylinder mit zwei im Abstand angeordneten Schwimmkolben aufweisen, die senkrecht zu den Zylindern der ersten Zylinder/Kolbenanordnung angeordnet sind, wobei ihre Längsachsen vorzugsweise miteinander fluchten, so daß das in den Zwischenraum zwischen den beiden Schwimmkolben zugeführte Druckgas die Schwimmkolben in entgegengesetzter Richtung auseinanderdrückt.

Im folgenden wird die Erfindung anhand einiger in der Zeichnung dargestellter Ausführungsbeispiele näher beschrieben. Es zeigen:
Fig. 1: eine perspektivische Ansicht eines Teils eines Cabriolets, das einen erfindungsgemäßen Überrollschutz mit zwei als Überrollbügel ausgebildeten, in der Ausgangsstellung befindlichen Überrollschutzelementen aufweist;
Fig. 2: eine teilweise geschnittene schematische Vorderseitenansicht von einem der Überrollbügel und einem kombinierten Hydraulikfluid/Druckgasantrieb zum Ausfahren des Überrollbügels;
Fig. 3a und b: teilweise geschnittene vergrößerte Seitenansichten eines Teils einer modifizierten Zylinder/Kolbeneinheit des Hydraulikfluid/Druckgasantriebs mit einem teleskopierbaren Kolben in der Ausgangs- und in der Überrollstellung;
Fig. 4: eine teilweise geschnittene schematische Seitenansicht eines anderen modifizierten Hydraulikfluid/Druckgasantriebs für den Überrollbügel.

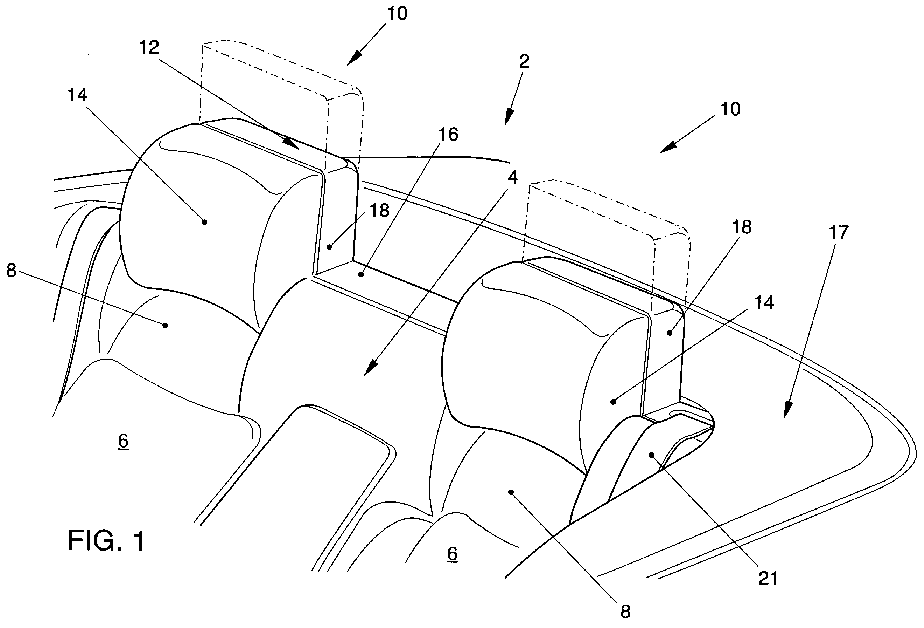

In Fig. 1 der Zeichnung ist ein Teil eines viersitzigen Cabriolets 2 dargestellt, hinter dessen Rücksitzbank 4 ein Überrollschutz 10 angeordnet ist. Der fest in das Cabriolet 2 eingebaute Überrollschutz: 10 weist zwei Überrollbügel 12 auf, die jeweils hinter den Rückenlehnen 8 der beiden Sitze 6 der Rücksitzbank 4 angeordnet und bei einer Aktivierung des Überrollschutzes 10 aus einer Ausgangsstellung (in Fig. 1 in durchgezogenen Linien dargestellt) nach oben in eine Überrollstellung (in Fig. 1 in strichpunktierten Linien dargestellt) ausgefahren werden, in der sie die benachbarten Kopfstützen 14 der Sitze 6 überragen.

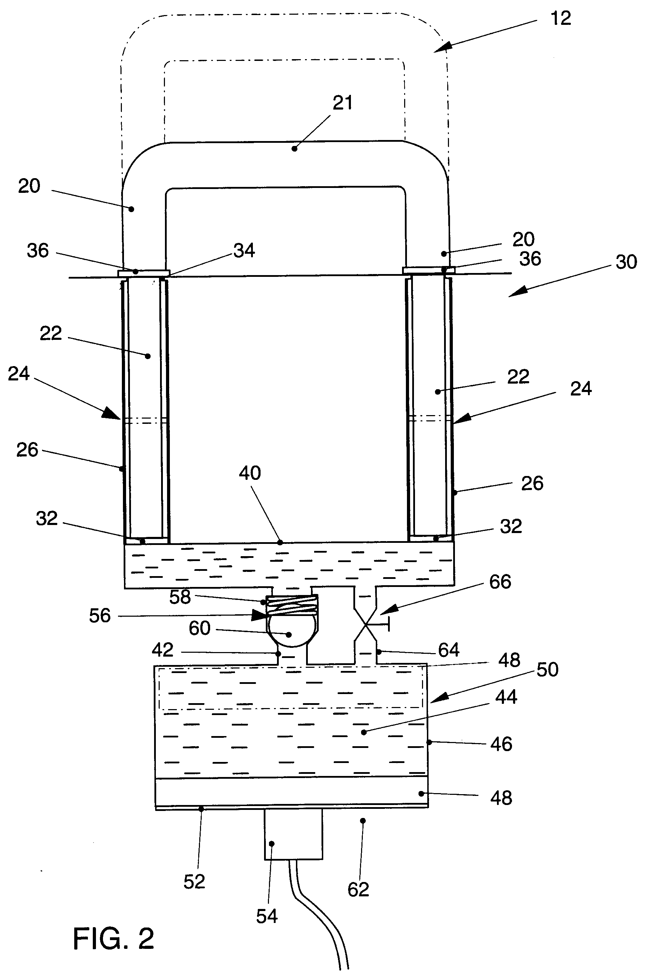

In der Ausgangsstellung steht der Überrollbügel 12 etwas über die Oberseite einer Abdeckleiste 16 über, die sich hinter den Rückenlehnen 8 der Sitze 6 und vor einer Abdeckung 17 eines Verdecks des Cabriolets 2 quer zur Fahrtrichtung erstreckt. Das über die Abdeckleiste 16 überstehende obere Ende des Überrollbügels 12 ist unmittelbar hinter der Kopfstütze 14 des benachbarten Sitzes 6 angeordnet und mit einer äußeren Verkleidung 18 versehen, deren Abmessungen an die Abmessungen der Kopfstütze 14 angepaßt sind. Zur Vereinfachung ist die Verkleidung 18 in den Figuren 2 bis 4 weggelassen.

Wie am besten in Fig. 2 dargestellt, weisen die beiden Überrollbügel 12 unter der Verkleidung 18 jeweils die Form eines umgekehrten U auf und besitzen zwei parallele zylindrische Schenkel 20, die an ihrem oberen Ende durch ein horizontales Joch 21 verbunden sind. Die unteren Enden der beiden Schenkel 20 sind jeweils starr mit einem Kolben 22 einer Zylinder/Kolbeneinheit 24 verbunden, der in Verlängerung des Schenkels 20 in einem zugehörigen Zylinder 26 der Einheit 24 vertikal verschiebbar gelagert ist. Die beiden Zylinder/Kolbeneinheiten 24 unter den beiden Schenkeln 20 jedes Überrollbügels 12 bilden zusammen eine erste Zylinder/Kolbenanordnung 30, deren Zylinder 26 gemeinsam mit einer Hydraulikflüssigkeit beaufschlagbar sind, um den Überrollbügel 12 aus der in durchgezogenen Linien dargestellten Ausgangsstellung in die in strichpunktierten Linien dargestellte Überrollstellung auszufahren.

Im einfachsten Fall (Fig. 2) werden die Kolben 22 jeweils von einem zylindrischen Rohr mit einem gegenüber dem Innendurchmesser des Zylinders 26 kleineren Außendurchmesser gebildet, wobei das untere Rohrende durch eine aufgeschweißte kreisförmige Kolbenplatte 32 verschlossen ist, deren Außendurchmesser dem Innendurchmesser des Zylinders 26 entspricht. Das obere Ende des Zylinders 26 ist mit einer Austrittsöffnung 34 für den Kolben 22 versehen, deren Innendurchmesser dem Außendurchmesser des Rohrs 22 entspricht. Der Rand der Austrittsöffnung 34 bildet somit eine Ringschulter, gegen welche die Kolbenplatte 32 in der Überrollstellung von innen her anschlägt, um den Bewegungsweg des Überrollbügels 12 beim Ausfahren zu begrenzen. Am unteren Ende jedes Schenkels 20 oberhalb des zugehörigen Kolbens 22 ist ein über die Umfangsfläche des Schenkels 20 überstehender Anschlagring 36 angebracht, der in der Ausgangsstellung des Überrollbügels 12 von außen her gegen eine äußere Stirnfläche des Zylinders 26 anschlägt, um den Bewegungsweg des Kolbens 22 beim Einfahren in den Zylinder 26 zu begrenzen. Zu Abdichtungszwecken können in bekannter Weise Dichtringe oder andere Dichtungen (nicht dargestellt) auf der Umfangsfläche der Kolbenplatte 32 und an der Austrittsöffnung 34 des Zylinders 26 vorgesehen sein.

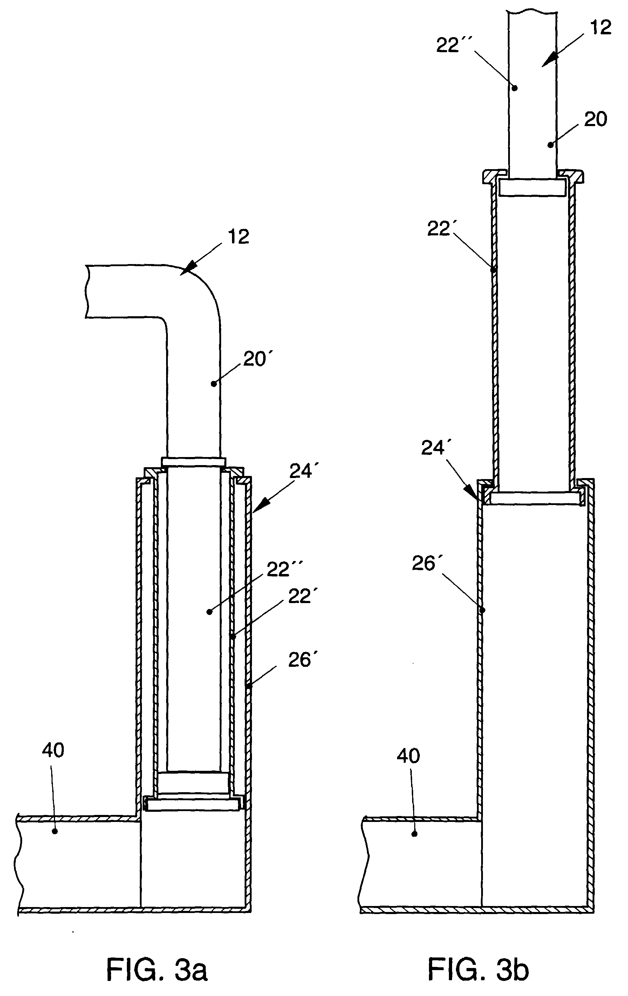

Um den Bewegungsweg des Überrollbügels 12 zu verlängern, ohne die Bauhöhe des Überrollschutzes 10 zu vergrößern, können die Kolben alternativ auch teleskopierbar sein, wie in den Figuren 3a und 3b für eine Zylinder/Kolbeneinheit 24' dargestellt. Im Zylinder 26' der Einheit 24' ist dort ein erster hohler Teleskopkolben 22' zwischen zwei Endstellungen vertikal verschiebbar gelagert. Innerhalb des ersten Teleskopkolbens 22' ist ein zweiter, vom unteren Ende eines Schenkels 20' des Überrollbügels 12' gebildeter zweiter Teleskopkolben 22'' ebenfalls zwischen zwei Endstellungen verschiebbar gelagert, wobei der Bewegungsweg der beiden Teleskopkolben 22', 22'' auch hier durch Anschläge begrenzt wird, die ähnlich wie diejenigen des Zylinder/Kolbeneinheiten 24 aus Fig. 1 ausgebildet sind.

Die beiden Zylinder 26, 26' jeder Zylinder/Kolbeneinheit 24, 24' kommunizieren an ihren unteren Enden durch eine senkrecht zu ihren Längsachsen verlaufende Verbindungsleitung 40 mit symmetrischen Leitungsquerschnitten, die durch eine in ihrer Mitte mündende Flüssigkeitszufuhrleitung 42 mit der Hydraulikflüssigkeit beaufschlagbar ist.

Die Hydraulikflüssigkeit befindet sich in der Ausgangsstellung des Überrollschutzes 10 in einem Speichervolumen 44, das von einem Zylinder 46 und einem im Zylinder 46 verschiebbaren Schwimmkolben 48 einer zweiten Zylinder/Kolbenanordnung 50 begrenzt wird. Der Schwimmkolben 48 befindet sich in der Ausgangsstellung in der Nähe von demjenigen Stirnende 52 des Zylinders 46, das zu der Einmündung der Leitung 42 in den Zylinder 46 entgegengesetzt ist. Auf der vom Speichervolumen 44 abgewandten Seite des Schwimmkolbens 48 ist die zweite Zylinder/Kolbenanordnung 50 mit einem Gasgenerator 54 versehen, der bei der Aktivierung des Überrollschutzes 10 gezündet wird. Durch das bei der Zündung des Gasgenerators 54 erzeugte, zwischen den Schwimmkolben 48 und die Stirnwand 52 in den Zylinder 46 zugeführte Druckgas wird der Schwimmkolben 48 in Richtung der Einmündung der Leitung 42 verschoben. Dadurch strömt die Hydraulikflüssigkeit durch die Leitung 42 und durch die Verbindungsleitung 40 gleichmäßig in die beiden Zylinder 26 der ersten Zylinder/Kolbenanordnung 30 und schiebt den Überrollbügel 12 nach oben in die Überrollstellung.

In der Flüssigkeitszufuhrleitung 42 befindet sich ein federbelastetes Kugelrückschlagventil 56, das sich entgegen der Kraft einer Schraubendruckfeder 58 selbsttätig öffnet, wenn der Druck im Speichervolumen 44 einen vorgegebenen Wert übersteigt. Das Kugelrückschlagventil 56 schließt sich durch die Feder 58 selbsttätig, wenn die Bewegung des Überrollbügels 12 in der Überrollstellung durch Anschlagen der Kolbenplatten 32 gegen die Ringschultern an den Austrittsöffnungen 34 der Zylinder 26 angehalten wird und der Druck in den Zylindern 26 der ersten Zylinder/Kolbenanordnung 30 ansteigt, bis er das Niveau des Drucks im Speichervolumen 44 erreicht und ein Druckausgleich hergestellt ist. Das Kugelrückschlagventil 56 schließt sich auch dann, wenn der Zylinder 46 der zweiten Zylinder/Kolbenanordnung 50 während des Überschlagens des Cabriolets durch den Aufprall auf ein Hindernis oder dergleichen beschädigt wird und der Druck im Zylinder 46 unter den von der Schraubendruckfeder 58 auf die Kugel 60 des Kugelrückschlagventils 56 ausgeübten Druck abfällt, wodurch der Überrollbügel 12 in der in diesem Moment erreichten Stellung blockiert wird.

Der Zylinder 46 weist eine Querschnittsfläche auf, die größer als die Summe der Querschnittsflächen der beiden Zylinder 26 ist, um die Bauhöhe des Überrollschutzes 10 gering zu halten. Der Zylinder 46 ist an seinem Stirnende 52 im Abstand vom Gasgenerator 54 mit einer kleinen Gasablaßöffnung 62 versehen, durch die sich der Druck der Verbrennungsgase im Zylinder 46 allmählich abbauen kann, nachdem sich der Schwimmkolben 48 bei ausgefahrenem Überrollbügel 12 in der in Fig. 2 in strichpunktierten Linien dargestellten Position befindet.

Zwischen dem Speichervolumen 44 und der Verbindungsleitung 40 ist weiter eine Bypassleitung 64 mit einem Absperrhahn 66 angeordnet. Der Absperrhahn 66 ist gewöhnlich verschlossen und kann manuell geöffnet werden, so daß der Überrollbügel 12 nach einer Auslösung des Überrollschutzes 10 wieder nach unten in die Ausgangsstellung zurückgedrückt werden kann, wenn es nicht zu einem Überschlagen gekommen ist oder das Cabriolet 2 nach einem Überschlagen wieder repariert werden soll. Beim Öffnen des Absperrhahns 66 strömt die Hydraulikflüssigkeit unterstützt durch eine Druckkraft auf das Joch 21 des Überrollbügels 12 in das Speichervolumen 44 zurück, so daß der Überrollschutz 10 nach einem Austausch des Gasgenerators 54 wieder betriebsbereit ist.

An Stelle des Absperrhahns 66 kann auch eine kleine elektrisch angetriebene Rotationspumpe mit umkehrbarer Drehrichtung (nicht dargestellt) in der Bypassleitung 64 vorgesehen sein, so daß sich die Hydraulikflüssigkeit vor einer Fahrt aus dem Speichervolumen 44 in die Zylinder 26 der ersten Zylinder/Kolbenanordnung 30 und nach der Fahrt wieder zurück in das Speichervolumen 44 pumpen läßt, wenn der Benutzer mit ausgefahrenen Überrollbügeln 12 fahren möchte, wie in der DE 37 32 562 C1 geschildert.

Während in Fig. 1 ein einziges Speichervolumen 44 für die Hydraulikflüssigkeit dargestellt ist, aus dem beide Zylinder 26 der ersten Zylinder/Kolbenanordnung 30 jedes Überrollbügels 12 mit der Hydraulikflüssigkeit beaufschlagt werden, kann alternativ auch ein einziges Speichervolumen für sämtliche vier Zylinder 26 der Zylinder/Kolbenanordnungen 30 beider Überrollbügel 12 vorgesehen sein, insbesondere bei Verwendung einer Pumpe in der Bypassleitung 64, da in diesem Fall eine einzige Pumpe ausreicht.

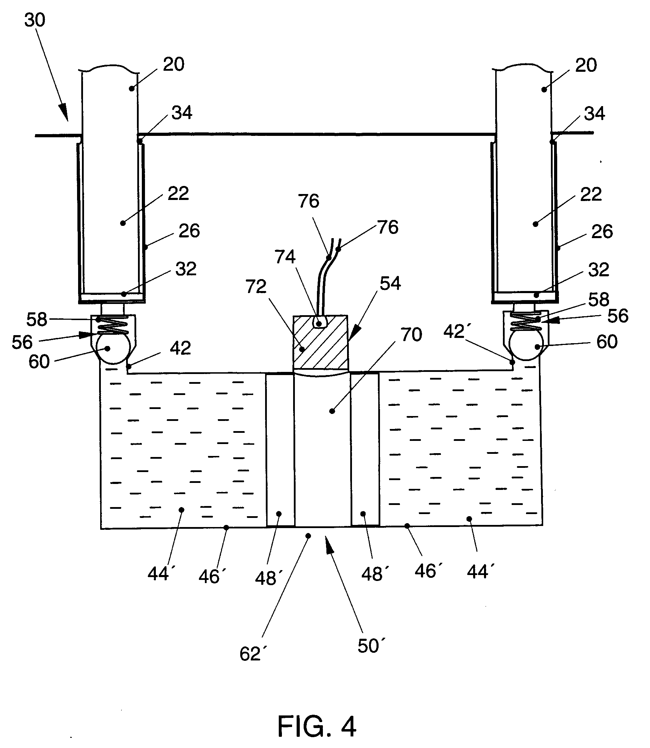

Eine weitere Alternative ist in Fig. 4 dargestellt, die einen Teil eines Überrollbügels 12 mit seinem Hydraulikfluid/ Druckgasantrieb zeigt, bei dem die beiden Zylinder 26 der ersten Zylinder/Kolbenanordnung 30 aus zwei getrennten Speichervolumina 44' mit Hydraulikflüssigkeit beaufschlagt werden. Dazu weist die zweite Zylinder/Kolbenanordnung 50' zwei entlang ihrer Längsachse miteinander fluchtende Zylinder 46' auf, die in der Nähe ihrer entgegengesetzten Stirnenden durch jeweils eine Flüssigkeitszufuhrleitung 42' mit dem benachbarten Zylinder 26 der ersten Zylinder/Kolbenanordnung 30 verbunden sind. Jeder der beiden Zylinder 46' weist im Inneren einen Schwimmkolben 48' auf, der die Hydraulikflüssigkeit beim Aktivieren des Überrollschutzes 10 in die zugehörige Leitung 42' und durch ein darin angeordnetes federbelastetes Kugelrückschlagventil 56 drückt. Bei der Anordnung aus Fig. 5 liegen außerdem die Kolben 22 in der Ausgangsstellung mit der freien Stirnfläche der Kolbenplatte 32 gegen den Boden des Zylinders 26 an, so daß ein zusätzlicher das Einfahren der Kolben 22 begrenzender Anschlag entbehrlich ist.

Dem Zwischenraum 70 zwischen den einander zugewandten Stirnseiten der beiden im Abstand voneinander angeordneten Schwimmkolben 48' wird bei der Aktivierung des Überrollschutzes 10 Druckgas vom Gasgenerator 54 zugeführt, der hier seitlich an einem Verbindungsstück zwischen den Zylindern 46' angebracht ist. Dadurch werden die beiden Schwimmkolben 48' in entgegengesetzter Richtung auseinandergedrückt und verdrängen die Hydraulikflüssigkeit aus den Speichervolumina 44' der zugehörigen Zylinder 46'. Die Gasablaßöffnung 62' ist hier gegenüber vom Gasgenerator 54 in der Seitenwand des Verbindungsstücks angeordnet.

Wie am besten in Fig. 5 dargestellt, weist der Gasgenerator 54 einen pyrotechnischen Zündsatz 72 und eine Zündpille 74 auf, die mit Hilfe eines durch Leitungskabel 76 zugeführten elektrischen Stroms gezündet wird. Die Zündung erfolgt, sobald ein elektrischer Stromkreis geschlossen wird, welcher neben der Zündpille 74 eine Stromquelle (nicht dargestellt) enthält. Die Stromquelle wird zweckmäßig von einem aufgeladenen Kondensator gebildet, so daß die Zündung auch bei einer Beschädigung der Batterie oder der Bordelektrik des Cabriolets 2 gewährleistet ist. Außer der Zündpille 74 und der Stromquelle enthält der Stromkreis noch einen oder mehrere Schalter, die von einem bzw. mehreren Überrollsensoren (nicht dargestellt) des Cabriolets 2 gebildet und bei Gefahr eines Überschlagens des Cabriolets 2, z.B. nach Überschreiten einer vorgegebenen Schräglage, automatisch geschlossen werden.

Beim Schließen des Schalters oder der Schalter wird der Kondensator entladen, wobei ein elektrischer Strom durch die Zündpille 74 fließt und diese zum Glühen bringt, um den Zündsatz 74 des Gasgenerators 54 zu zünden. Bei dessen Zündung strömen die heißen Verbrennungsgase in den Zwischenraum zwischen dem Schwimmkolben 48 und der Stirnwand des Zylinders 46 bzw. in den Zwischenraum 70 zwischen den beiden Schwimmkolben 48', wodurch der bzw. die Schwimmkolben 48 bzw. 48' im Zylinder 46 bzw. in den Zylindern 46' verschoben werden.

Dadurch wird die Hydraulikflüssigkeit aus dem Speichervolumen 44 bzw. aus den Speichervolumina 44' durch die Leitung 42 bzw. durch die Leitungen 42' und die darin angeordneten Rückschlagventile 56 in die Zylinder 26 der ersten Zylinder/Kolbenanordnung 30 gedrückt, um die Kolben 22 und damit die Überrollbügel 12 in die Überrollstellung auszufahren.

## Patentansprüche

1. Überrollschutz für ein offenes Kraftfahrzeug, insbesondere für ein Cabriolet, mit mindestens einem Überrollschutzelement, das bei einer Aktivierung des Überrollschutzes von einem unter Druck stehenden inkompressiblen Fluid aus einer Ausgangsstellung nach oben in eine Überrollstellung getrieben wird, dadurch gekennzeichnet, daß das inkompressible Fluid bei der Aktivierung des Überrollschutzes (10) mit einem Druckgas beaufschlagbar ist, so daß es in mindestens einen Zylinder (26, 26') einer auf das Überrollschutzelement (12) einwirkenden Zylinder/Kolbenanordnung (30) strömt.

2. Überrollschutz für ein offenes Kraftfahrzeug, insbesondere für ein Cabriolet, mit mindestens einem Überrollschutzelement, das bei einer Aktivierung des Überrollschutzes von einem unter Druck stehenden inkompressiblen Fluid aus einer Ausgangsstellung nach oben in eine Überrollstellung getrieben wird, insbesondere nach Anspruch 1, dadurch gekennzeichnet, daß das inkompressible Fluid vor dem Eintritt in mindestens einen Zylinder (26, 26') einer auf das Überrollschutzelement (12) einwirkenden Zylinder/Kolbenanordnung (30) ein selbsttätig schließendes Rückschlagventil (56) durchströmt.

3. Übetrollschutz nach Anspruch 2, dadurch gekennzeichnet, daß sich das Rückschlagventil (56) selbsttätig öffnet, wenn der Druck des mit dem Druckgas beaufschlagten Fluids einen vorgegebenen Wert übersteigt.

4. Überrollschutz nach Anspruch 2 oder 3, dadurch gekennzeichnet, daß das Rückschlagventil ein federbelastetes Rückschlagventil (56) ist.

5. Überrollschutz nach einem der Ansprüche 2 bis 4, dadurch gekennzeichnet, daß das Rückschlagventil ein Kugel- oder Teller-Rückschlagventil (56) ist.

6. Überrollschutz nach einem der Ansprüche 2 bis 5, gekennzeichnet durch eine das Rückschlagventil (56) umgehende Bypassleitung (64) mit einem Absperrhahn (66).

7. Überrollschutz nach einem der Ansprüche 2 bis 5, gekennzeichnet durch eine das Rückschlagventil (56) umgehende Bypassleitung (64) mit einer Pumpe mit umkehrbarer Förderrichtung.

8. Überrollschutz nach einem der Ansprüche 1 bis 7, gekennzeichnet durch einen Gasgenerator (54) zum Erzeugen des Druckgases.

9. Überrollschutz nach Anspruch 8, dadurch gekennzeichnet, daß der Gasgenerator (54) bei der Aktivierung des Überrollschutzes (10) gezündet wird.

10. Überrollschutz nach Anspruch 8 oder 9, dadurch gekennzeichnet, daß ein Zündstromkreis des Gasgenerators (54) einen Zündkondensator enthält.

11. Überrollschutz nach einem der Ansprüche 1 bis 10, dadurch gekennzeichnet, daß das Überrollschutzelement (12) starr mit mindestens einem Kolben (22) der Zylinder/Kolbenanordnung (30) verbunden ist, der im Zylinder (26) verschiebbar ist.

12. Überrollschutz nach Anspruch 11, dadurch gekennzeichnet, daß der Kolben (22', 22'') teleskopierbar ist.

13. Überrollschutz nach einem der Ansprüche 1 bis 12, dadurch gekennzeichnet, daß das Überrollschutzelement als Überrollbügel (12) mit einem Joch (21) und zwei chenkeln (20, 20') ausgebildet ist, und daß die Zylinder/Kolbenanordnung (30) zwei parallele Zylinder/Kolbeneinheiten (24', 24) aufweist, deren Kolben (22, 22') in Verlängerung der beiden Schenke (22) angeordnet sind.

14. Überrollschutz nach Anspruch 13, dadurch gekennzeichnet, daß die Zylinder (26, 26') der beiden Zylinder/Kolbeneinheiten (24, 24') miteinander kommunizieren.

15. Überrollschutz nach einem der Ansprüche 1 bis 14, dadurch gekennzeichnet, daß das Druckgas das Fluid aus einem Speichervolumen (44, 44') in den Zylinder (26, 26') drückt.

16. Überrollschutz nach Anspruch 15, dadurch gekennzeichnet, daß das Speichervolumen (44, 44') von mindestens einem Zylinder (46, 46') und einem Schwimmkolben (48, 48') einer weiteren Zylinder/Kolbenanordnung (50, 50') begrenzt wird.

17. Überrollschutz nach Anspruch 16, dadurch gekennzeichnet, daß die vom Speichervolumen (44, 44') abgewandte Stirnseite des Schwimmkolbens (48, 48') mit dem Druckgas beaufschlagbar ist.

18. Überrollschutz nach Anspruch 16 oder 17, dadurch gekennzeichnet, daß der Zylinder (46, 46') der weiteren Zylinder/Kolbenanordnung (50, 50') mindestens eine Gasablaßöffnung (62) mit kleinem Öffnungsquerschnitt aufweist.

19. Überrollschutz nach einem der Ansprüche 16 bis 18, dadurch gekennzeichnet, daß die weitere Zylinder/Kolbenanordnung (50') zwei Zylinder (46') aufweist, deren Schwimmkolben (48') durch das Druckgas auseinander gedrückt werden.

20. Überrollschutz nach Anspruch 19, dadurch gekennzeichnet, daß die Längsachsen der beiden Zylinder (46') miteinander fluchten.

21. Offenes Kraftfahrzeug, insbesondere Cabriolet, gekennzeichnet durch einen Überrollschutz (10) nach einem der vorangehenden Ansprüche.
